# EUROPEAN PATENT APPLICATION

(11) **EP 4 821 802 A1**
(43) Date of publication of application: **14.10.2026**
(21) Application number: 26166565.7
(22) Date of filing: 20.03.2026
(51) Int. Cl.: B62D 25/10, B60K 11/08, B62D 25/12

(54) **IMPROVED HOOD FOR A TRACTOR**

(30) Priority: 09.04.2025 IT 202500007833
(71) Applicant: CNH Industrial Italia S.p.A., 10156 Torino (IT); CNH Industrial N.V., Basildon Essex SS14 3AD (GB); CNH Industrial Österreich GmbH, 4300 St. Valentin (AT)
(72) Inventor: Dannerbauer, Harald, 4300 Sankt Valentin (AT); Condurat, Constantin Dragos, 10156 Turin (IT); Bedogni, Emiliano, 10156 Turin (IT); Chathukutty Rajani, Syam, Basildon, SS14 3AD (GB)
(74) Representative: CNH Industrial IP Department

(57) **Abstract**

Hood (3) for an off-road vehicle (1) extending along a longitudinal axis (A), the hood (3) comprising a front portion (3a), a rear portion (3b) and a lateral portion (3c) connected together to define a space (7) configured to house a traction system for the off-road vehicle (1),
wherein the rear portion (3b) defines at least one opening (9) and the hood (3) comprises occlusion means (11) configured to selectively allow or deny the passage of fluid from space (7) towards the environment via the at least one opening (9).

## Description

### TECHNICAL FIELD

The present invention concerns a hood assembly for off-road vehicles.

The present invention finds its preferred, although not exclusive, application in agricultural tractors. Reference will be made to this application by way of example below.

### BACKGROUND OF THE INVENTION

Off-road vehicles such as agricultural vehicles, e.g. tractors, are provided with a traction system that is covered by a hood to protect from environment.

Traction system comprises different operative systems such as engine, transmission or hydraulic system that, during their use, generate heat.

Such heat is dissipated via ventilation means that generate a flow of air through the traction system to disperse heat in the environment.

Ventilation means are placed in a front position of the hood, thereby pushing the airflow, heated by the passage towards the traction system, towards the rear portion of the vehicle.

In the rear portion of the vehicle the driver's seat or the cabin is present. Accordingly, such heated airflow decreases the comfort of the driver and/or increases the thermodynamic load that needs to be handled by a conditioning system for the cab.

Therefore, the need is felt to reduce the flow of heated air towards the rear portion of the vehicle coming from the hood without compromising the need to efficiently cooling the traction system.

The object of the invention is to fulfil the needs discussed above.

An aim of the present invention is to satisfy the above mentioned needs in a cost-effective and optimized manner.

### SUMMARY OF THE INVENTION

The aforementioned aim is reached by a hood and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a lateral schematic view of an off-road vehicle provided with a hood according to the invention;

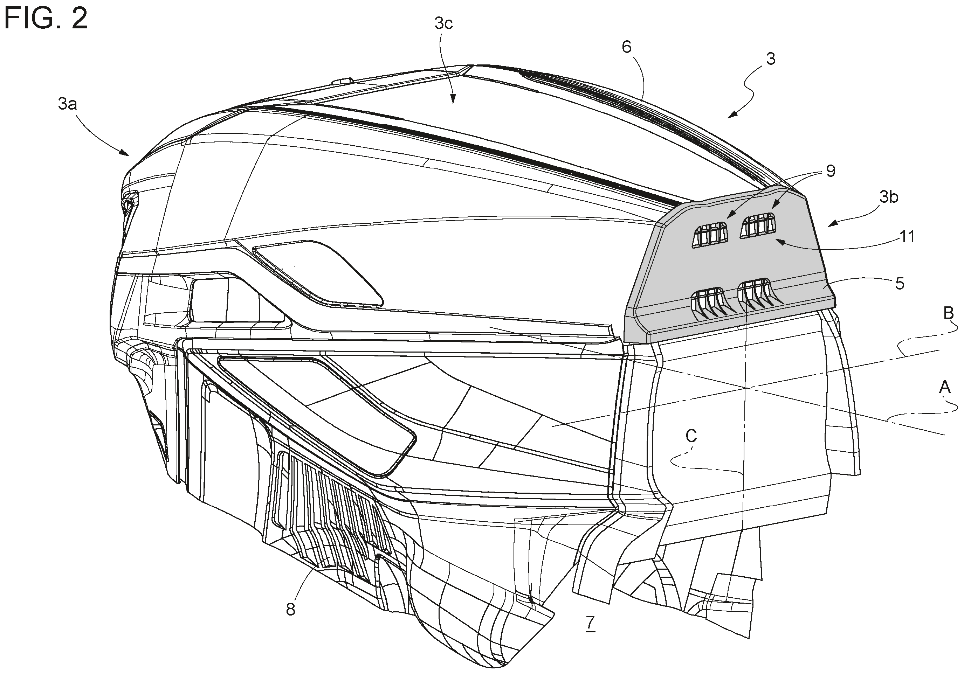

- _Figure 2 is a perspective view of a hood according to the invention;
- Figure 3 is a perspective rear view of a portion of a hood according to the invention; and
- Figure 4 is a perspective front view of a portion of a hood according to the invention.

### DETAILED DESCRIPTION OF THE INVENTION

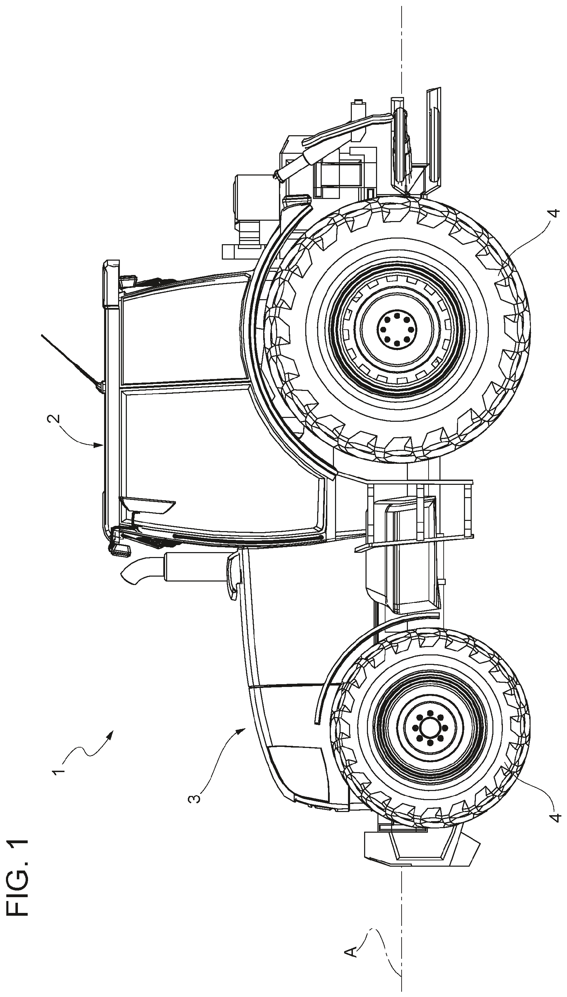

In figure 1 it is shown an off-road such as an agricultural vehicle 1 extending along a longitudinal axis A and comprising a cab 2 and a hood 3. The vehicle 1 is movable on grounds by ground engaging means 4, e.g. by wheels.

In particular, the hood 3 is placed forwardly along longitudinal axis A with respect to cab 2. As per se known, the hood 3 is configured to define a space for housing the traction system of the vehicle, e.g. power systems such as the engine or operative systems such as hydraulic system or powertrain system.

The hood 3, accordingly, comprises a front portion 3a, according to the standard motion of vehicle 1, and a rear portion 3b along longitudinal axis A and a lateral portion 3c connecting the front and rear portions 3a, 3b.

In particular, it is noticed that the rear portion 3b is faced to the cab 2 while the front portion 3a is faced to environment.

In particular, the hood 3 comprises a main structure 6 and a closing portion 5 configured to cooperate together to delimit a space 7 configured to house the above the traction system.

In particular, the main structure 6 and the closing portion 5 are selectively connected by mechanical coupling means, such as threaded elements.

In the disclosed embodiment, main structure 6 defines the front portion 3a and the lateral portion 3c. It is noticed that at least lateral walls of the lateral portion 3c define opening/s 8 for allowing fluid communication between the space 7 and the environment, in particular along a direction that is inclined with respect to the longitudinal axis A, in detail transversally thereof.

In the disclosed embodiment, the closing portion 5 defines the rear portion 3b and therefore has a shape that is configured to match with the a rear edge of the main structure 6 thereby delimiting early the space 7.

The hood 3 comprises at least one opening 9 in the rear portion 3b thereof configured to allow fluidic communication between space 7 and the environment.

In the disclosed embodiment, since the rear portion 3b essentially comprises the closing portion 5, such opening 9 is realized in the closing portion 5 and preferably are defined as a plurality.

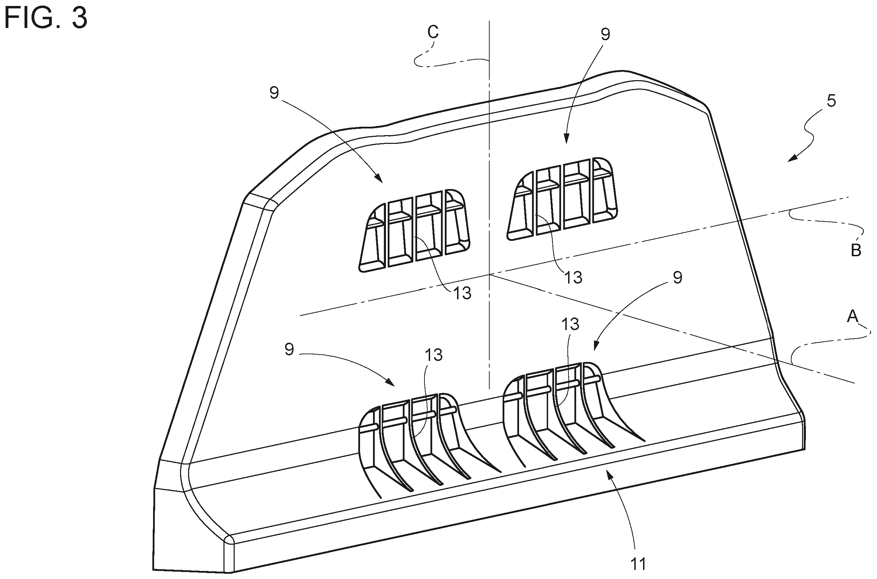

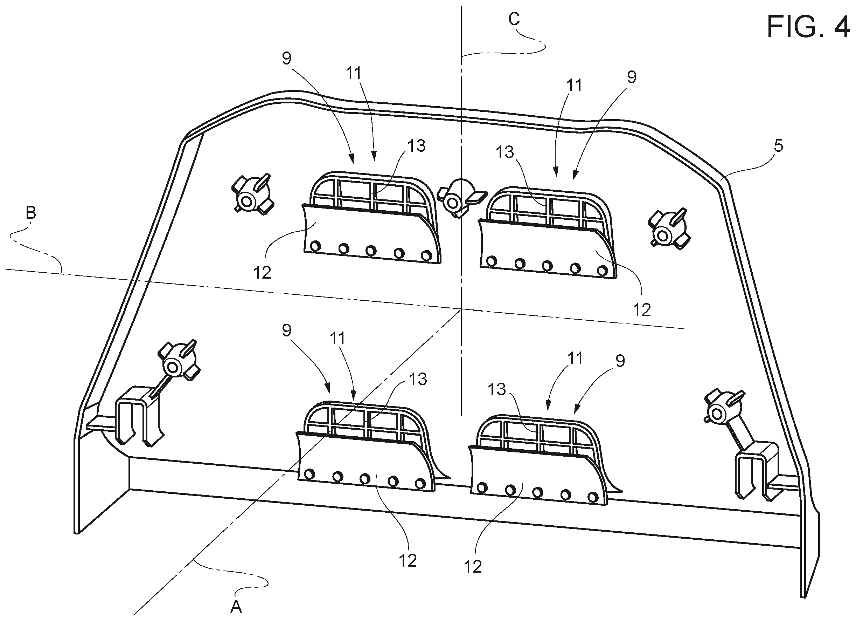

In detail, making reference to figures 3 and 4, the openings 9 are placed in an ordered manner about transversal and vertical axis B, C perpendicular to longitudinal axis A. More in detail, the openings 9 are configured to allow air passage along longitudinal axis A.

In detail, the openings 9 in the disclosed embodiment are placed two-by two in a squared disposition. More preferably, openings 9 discloses have a quadrangular shape, in particular a substantial rectangular/trapezoidal shape.

Preferably, openings 9 are provided with occlusion means 11 configured to selectively allow or deny the passage of fluid from space 7 towards the environment via said openings 9.

In detail, such occlusion means 11 comprises damper means 12 configured to selectively occlude the free passage of opening 9. In particular, it is foreseen one damper 12 for each opening 9.

In detail, damper means 12 are configured to assume a first position in which allows the fluid communication through opening 9 between space 7 and environment and a second position in which deny such fluid communication.

In detail, the passage from first and second position of the damper means 12 depends on the status of a physical quantity related to the vehicle operation. Preferably such physical quantity is a flowrate or a temperature, in particular of a flow coming from the traction system of the vehicle.

In particular, the damper means 12 according to the present invention comprise a soft wall that is carried by an edge of the opening 9.

According to the disclosed embodiment, the soft wall is fixedly connected to a lower edge of the opening along vertical axis C, thereby being bent - due to its weight - in order to allowing fluid communication through opening 9 till a predefined flow flows from the space 7 through opening 9 thereby closing the passage.

In further detail, the occlusion means 11 according to the present invention comprises retention means 13 configured to maintain the damper means 12 in the aforementioned second position till the aforementioned status of the physical quantity occurs.

In particular, according to the disclosed embodiment, retention means 13 comprises a grille configured to sustain the aforementioned soft wall during the second position when pushed by the aforementioned flow.

In particular, such grille is realized by arms realized through the passage section of each opening 9 and connecting different sides thereof.

The operation of the embodiment of the invention as described above is the following.

During a low-load operation of the vehicle 1, the airflow coming from traction system is negligible, therefore cannot move the damper means 12 to occlude the openings 9. Conversely, when a higher load operation is carried out, the airflow coming from traction system automatically close the damper means 12 over the openings 9 thereby avoiding the fluid communication towards the rear portion of the hood, i.e. forcing airflow to exit from other openings 8, such as the ones in the lateral portion 3c.

In the disclosed embodiment, in particular, the airflow lift the soft wall thereby pushing against the grille of each opening 9 and thereby closing the passage through opening 9. Such condition is maintained till the airflow is present.

In view of the foregoing, the advantages of a hood and a assembly according to the invention are apparent.

Thanks to the proposed rear portion it is possible to deviate the airflow coming from the inner space of the hood towards other openings without compromising the need of cooling down the traction system.

In particular, the provided occlusion means that are passively controlled are particularly cheap and compact, i.e. don't need a substantial reconfiguration of the hood or peculiar control systems in a basic configuration.

Moreover, the preferred disclosed embodiment self-controls in function of the airflow coming from the traction system and its operation can be finely tuned by varying the shape of the damper means.

It is clear that modifications can be made to the described hood and assembly which do not extend beyond the scope of protection defined by the claims.

For example, occlusion means can be provided as actively controlled occlusion means, such as a damper hinged to the opening and controlled by an actuator on the base of airflow/airflow temperature.

Clearly, openings may be in different number and/or disposition with respect to the disclosed one or having a different shape.

Furthermore, the provided damper means may be realized differently, e.g. being a rigid wall or being hinged or being placed in a different manner with respect to the disclosed one.

## Claims

1. Hood (3) for an off-road vehicle (1) extending along a longitudinal axis (A), said hood (3) comprising a front portion (3a), a rear portion (3b) and a lateral portion (3c) connected together to define a space (7) configured to house a traction system for said off-road vehicle (1),
wherein said rear portion (3b) defines at least one opening (9) and said hood (3) comprises occlusion means (11) configured to selectively allow or deny the passage of fluid from space (7) towards the environment via said at least one opening (9).

2. Hood according to claim 1, wherein said occlusion means (11) comprises damper means (12) associated to said at least one opening (9) and configured to assume a first position in which allow the fluid communication through said opening (9) and a second position in which deny such fluid communication.

3. Hood according to claim 2, wherein the passage from first and second position of said damper means (12) depends on the status of a physical quantity related to the vehicle operation.

4. Hood according to claim 2 or 3, wherein said physical quantity is the flow-rate of an airflow coming towards said opening (9).

5. Hood according to any of claims 2 to 4, wherein said damper means comprise a soft wall connected to an edge of said opening (9).

6. Hood according to claim 5, wherein said soft wall is fixedly connected to a lower edge of said opening (9).

7. Hood according to claim 5 or 6, further comprising retention means (13) configured to sustain said soft wall in said second position.

8. Hood according to claim 7, wherein said retention means (13) comprises a grille.

9. Hood according to claim 8, wherein said grille is realized within the passage section of said opening (9).

10. Hood according to any of the preceding claims, comprising a plurality of openings (9) realized in said rear portion (3b) along vertical and transversal axis (B, C) perpendicular to said longitudinal axis (A).

11. Hood according to any of the preceding claims, wherein said opening (9) are arranged on said rear portion (3b) to allow fluidic communication through said opening (9) along said longitudinal axis (A).

12. Assembly of a hood according to any of the preceding claims and a traction system housed within said space (7).

13. Vehicle comprising a hood according to any of claims 1 to 11.
